# EUROPÄISCHE PATENTANMELDUNG

(11) **EP 3 706 388 A1**
(43) Veröffentlichungstag der Anmeldung: **09.09.2020**
(21) Anmeldenummer: 20156834.2
(22) Anmeldetag: 12.02.2020
(51) Int. Cl.: H04L 29/06, G06F 21/85

(54) **VERFAHREN ZUM BEREITSTELLEN EINES KRYPTOGRAPHISCHEN SCHLÜSSELS**

(30) Priorität: 06.03.2019 DE 102019105599
(71) Anmelder: Insta GmbH, 58509 Lüdenscheid (DE)
(72) Erfinder: Stecura, Darius, 45731 Waltrop (DE)

(57) **Zusammenfassung**

Ein Verfahren dient zum Bereitstellen eines kryptographischen Schlüssels für eine symmetrisch verschlüsselte Kommunikation zwischen in einem Netzwerk 1 organisierten Netzwerkteilnehmern N₁ - Nₓ. Bei diesem Verfahren wird in einem ersten Schritt von einem Inbetriebnahme-Client 3 durch Senden eines Identifikationsinformationssendebefehls von jedem in das Netzwerk 1 zu integrierenden Netzwerkteilnehmer N₁ - Nₓ eine Identifikationsinformation angefordert und nach Empfang der Identifikationsinformation von dem Inbetriebnahme-Client 3 in einem weiteren Schritt an diese Netzwerkteilnehmer N₁ - Nₓ ein Netzwerkschlüssel für die verschlüsselte Kommunikation übermittelt. Der Identifikationsinformationssendebefehl wird als Broadcast wiederholt gesendet wird, wobei jeder Netzwerkteilnehmer N₁ - Nₓ, dessen Identifikationsinformation durch den Inbetriebnahme-Client 3 empfangen wurde, durch einen an diesen Netzwerkteilnehmer N₁ - Nₓ gerichteten Mute-Befehl stumm geschaltet wird, damit dieser Netzwerkteilnehmer N₁ - Nₓ bei erneutem Empfang des Identifikationsinformationssendebefehls seine Identifikationsinformation nicht nochmals sendet.

## Beschreibung

Die Erfindung betrifft ein Verfahren zum Bereitstellen eines kryptographischen Schlüssels für eine symmetrisch verschlüsselte Kommunikation zwischen in einem Netzwerk organisierten Netzwerkteilnehmern, bei welchem Verfahren in einem ersten Schritt von einem Inbetriebnahme-Client durch Senden eines Identifikationsinformationssendebefehls von jedem in das Netzwerk zu integrierenden Netzwerkteilnehmer eine Identifikationsinformation angefordert und nach Empfang der Identifikationsinformation von dem Inbetriebnahme-Client in einem weiteren Schritt an diese Netzwerkteilnehmer ein Netzwerkschlüssel für die verschlüsselte Kommunikation übermittelt wird.

Netzwerke werden beispielsweise im Zusammenhang mit Gebäudeinstallationssystemen eingesetzt. Bei derartigen Systemen kommunizieren die als Netzwerkteilnehmer dienenden Geräte, wie beispielsweise Sensoren und Aktoren untereinander entweder drahtgebunden oder auf einer Funkstrecke. In ein solches Netzwerk ist typischerweise ein Server integriert. Dieser wird daher auch als Netzwerk-Server angesprochen. Eine Kommunikation unter den Netzwerkteilnehmern ist grundsätzlich auch ohne einen solchen Netzwerk-Server möglich. Die Kommunikation läuft jedoch über diesen, wenn im Falle eines Gebäudeinstallationssystems bestimmte Komfortfunktionen an einem Aktor, beispielsweise der Beleuchtungseinrichtung, ausgeführt werden sollen. Eine Kommunikation in einem solchen Gebäudeinstallationsbus wird mit einem an sich bekannten Standard, beispielsweise dem KNX-Standard durchgeführt. Auch werden firmenspezifische Standards eingesetzt, wie beispielsweise das System eNet, welches von einigen Unternehmen für eine bidirektionale Funkkommunikation vorgesehen ist.

Die Kommunikation zwischen den Netzwerkteilnehmern wird verschlüsselt durchgeführt, um manipulative Eingriffe in ein solches Gebäudeinstallationssystem zu erschweren, wenn nicht gar unmöglich zu machen. Dieses gilt sowohl für eine drahtgebundene Kommunikation als auch für eine Kommunikation auf einer Funkstrecke, wobei in vielen Fällen in einem Netzwerk auch unterschiedliche Kommunikationsstrecken vorhanden sein können. Zu diesem Zweck stellt der in einem solchen Netzwerk integrierte Server, der in diesem Zusammenhang auch die Funktion eines Trust-Centers einnimmt, einen Netzwerkschlüssel zur Verfügung, den die Netzwerkteilnehmer sodann für ihre Kommunikation untereinander und für die Kommunikation mit dem Server verwenden. In einem solchen Fall stellt der Netzwerk-Server zugleich den Inbetriebnahme-Client für die Inbetriebnahme des Netzwerkes dar. Jeder Netzwerkteilnehmer hat denselben Schlüssel. Die Verschlüsselung der zu übertragenden Daten erfolgt daher symmetrisch. Für die genannten Zwecke ist eine symmetrische Verschlüsselung vorteilhaft, da sich diese auch mit einer geringen Rechenleistung realisieren lässt. Bei Gebäudeinstallationsgeräten der in Rede stehenden Art ist die diesbezügliche Elektronik in aller Regel als embedded-system ausgeführt, weshalb eine ausreichende Rechenleistung zum Durchführen einer asymmetrischen Verschlüsselung in aller Regel nicht vorhanden ist.

Der Netzwerkschlüssel muss verschlüsselt von dem Inbetriebnahme-Client an die Netzwerkteilnehmer übertragen werden, damit dieser nicht abgefangen und unbefugt verwendet werden kann. Auch für diese Verschlüsselung wird eine symmetrische Verschlüsselung eingesetzt. Zu diesem Zweck verfügt jedes Gebäudeinstallationsgerät - jeder Netzwerkteilnehmer - über einen eigenen, individuellen kryptographischen Schlüssel (Master-Key). Dieser ist in aller Regel auf einem Aufkleber auf dem Gerät aufgedruckt und muss in einem solchen Fall manuell dem Inbetriebnahme-Client, beispielsweise einem als Trust-Center dienenden Netzwerk-Server, bekanntgegeben werden. Die manuelle Eingabe des geräteeigenen Master-Keys auf diese Weise an den Inbetriebnahme-Client ist grundsätzlich möglich, ist jedoch bei einer Vielzahl von in ein Netzwerk einzubindenden Geräten zeitaufwendig und fehlerträchtig. Dieses gilt insbesondere für größere Netzwerke, wenn in dieses beispielsweise mehrere hundert Netzwerkteilnehmer oder auch mehr eingebunden werden sollen. Das Vorstehende trifft nicht nur für eine Neueinrichtung des Netzwerkes zu, sondern auch für den Fall, dass Geräte oder ganze Netzwerklinien zu einem späteren Zeitpunkt in das Netzwerk integriert werden sollen. Es ist dann in aller Regel erforderlich, sämtliche Geräte neu bei dem Inbetriebnahme-Client mit ihrem Master-Key anzumelden, damit dieser einen Netzwerkschlüssel an alle dann im Netzwerk organisierten Netzwerkteilnehmer sendet. Wenn der Inbetriebnahme-Client die Master-Keys der Netzwerkteilnehmer kennt, erfolgt die Bekanntgabe des Netzwerkschlüssels jeweils mit dem netzwerkteilnehmereigenen Master-Key verschlüsselt. Daher ist eine solche Übertragung abhörsicher.

Ein Verfahren zum Verteilen eines Netzwerkschlüssels in einem Funknetzwerk, bei dem eine höhere Manipulationssicherheit gewährleistet ist, ist aus EP 3 358 802 A1 bekannt. Aus diesem Stand der Technik ist bekannt, dass zum Einsammeln der Identifikationsinformation die Netzwerkteilnehmer einen Identifikationsinformationssendebefehl von einem Netzwerk-Server als Inbetriebnahme-Client erhalten, durch den diese aufgefordert werden, ihre Identifikationsinformation zu senden. Als Identifikationsinformation wird von den Netzteilnehmern nach Empfang des Identifikationsinformationssendebefehls die geräteseitige Seriennummer als Antwortnachricht gesendet. Das aus diesem Stand der Technik vorbekannte Verfahren dient der Organisation eines Funk-Netzwerkes. Funknetzwerke sind hinsichtlich der Anzahl der darin organisierten Netzwerkteilnehmer typischerweise begrenzt. Dieser Stand der Technik gibt keine Information, wie vor allem auch in vertretbarer Zeit bei größeren Netzwerken sichergestellt werden kann, dass der Inbetriebnahme-Client die Identifikationsinformation von sämtlichen in das Netzwerk zu integrierenden Netzwerkteilnehmern tatsächlich auch erhält.

Ausgehend von diesem diskutierten Stand der Technik liegt der Erfindung daher die Aufgabe zugrunde, ein Verfahren der eingangs genannten Art dergestalt weiterzubilden, dass eine Initialisierung des Netzwerkes zum Herstellen einer Netzwerkverbindung zwischen den Netzwerkteilnehmern und dem Inbetriebnahme-Client vereinfacht ist.

Gelöst wird diese Aufgabe erfindungsgemäß durch ein eingangs genanntes, gattungsgemäßes Verfahren, bei dem der Identifikationsinformationssendebefehl als Broadcast wiederholt gesendet wird, wobei jeder Netzwerkteilnehmer, dessen Identifikationsinformation durch den Inbetriebnahme-Client empfangen wurde, durch einen an diesen Netzwerkteilnehmer gerichteten Mute-Befehl stumm geschaltet wird, damit dieser Netzwerkteilnehmer bei erneutem Empfang des Identifikationsinformationssendebefehls seine Identifikationsinformation nicht nochmals sendet.

Bei diesem Verfahren wird der Identifikationsinformationssendebefehl als Broadcast von einem Inbetriebnahme-Client gesendet, und zwar mehrfach wiederholt, und zwar typischerweise solange, bis von dem Inbetriebnahme-Client keine Antwortnachricht eines Netzwerkteilnehmers mit einer Identifikationsinformation mehr empfangen wird. Bei dem Inbetriebnahme-Client kann es sich beispielsweise um einen PC, einen mobilen Computer oder auch um den Zentral-Server des Netzwerkes handeln, wenn das Netzwerk einen solchen umfasst. Nach dem Senden eines Identifikationsinformationssendebefehls wird eine vorgegebene Zeitspanne abgewartet, bis dieser Befehl erneut als Broadcast gesendet wird. Von Besonderheit bei diesem Verfahren ist, dass diejenigen Netzwerkteilnehmer, deren Identifikationsinformation von dem Inbetriebnahme-Client empfangen worden ist, in einem nachfolgenden Schritt in einen Mute-Modus geschaltet werden. Dieses erfolgt durch einen von dem Inbetriebnahme-Client an diesen Netzwerkteilnehmer gesendeten individuellen Mute-Befehl. Ist ein Netzwerkteilnehmer in seinen Mute-Modus geschaltet, sendet dieser die Antwortnachricht mit seiner Identifikationsinformation nicht nochmals, auch wenn er den Broadcast des Identifikationsinformationssendebefehls noch ein oder mehrfach empfängt. Die Wartezeit nach erstmaligem Senden des Identifikationsinformationssendebefehls bis zum erneuten Senden desselben kann bei diesem Verfahren deutlich kürzer bemessen sein als bei herkömmlichen Verfahren. Bei herkömmlichen Verfahren musste die Wartezeit solange bemessen sein, dass gewährleistet ist, dass die Identifikationsinformation von jedem Netzwerkteilnehmer auch erhalten worden ist. Grund für die Möglichkeit, die jeweilige Wartezeit im Zusammenhang mit dem wiederholten Senden zu verkürzen, da die Anzahl der zurückgesendeten Antwortnachrichten mit jeder Wiederholung bei gleichbleibender Reichweite des Broadcastbefehls geringer wird. Dieses macht sich vor allem bei größeren Netzwerken in einer deutlich verringerten Zeit zum Integrieren der Netzwerkteilnehmer in das Netzwerk bemerkbar. Zudem wird durch dieses Verfahren gewährleistet, dass auf einer Funkstrecke gesendete Antwortnachrichten, wenn auch nicht immer bei der ersten Antwortwelle, doch zumindest bei einer der nachfolgenden Antwortwellen von dem Inbetriebnahme-Client empfangen werden. Bei diesem Verfahren erhält der Inbetriebnahme-Client entsprechend der gewählten Wartezeitspanne (Time-Out-Zeitspanne) die Identifikationsinformation von etlichen oder auch einer ersten Vielzahl von Netzwerkteilnehmern. Bei dem zweiten Identifikationsinformationssendebefehl-Broadcast antworten diese, da im Mute-Modus befindlich, nicht mehr, sodass die Anzahl der mit ihrer Identifikationsinformation antwortenden Netzwerkteilnehmer sukzessive abnimmt. Netzwerkteilnehmer, deren Identifikationsinformation von dem Inbetriebnahme-Client nicht empfangen worden ist, antworten somit auch bei jedem weiteren Identifikationsinformationssendebefehl-Broadcast, solange bis diese als Bestätigung ihrer Registrierung von dem Inbetriebnahme-Client den Mute-Befehl erhalten haben. Durch dieses Verfahren werden somit Übertragungsfehler bei der Übermittlung des Identifikationsinformationssendebefehl-Broadcast an die in das Netzwerk zu integrierenden Netzwerkteilnehmer und entsprechend Übertragungsfehler auch bei der Übermittlung der Antwortnachrichten durch das Verfahren selbst behoben. Somit eignet sich dieses Verfahren insbesondere zum Initialisieren von Netzwerken mit einer größeren Anzahl an Netzwerkteilnehmern.

Die Time-Out-Zeitspanne, die der Inbetriebnahme-Client wartet, um den Identifikationsinformationssendebefehl erneut zu senden, kann bei jeder Wiederholung konstant bleiben. Durchaus kann es sich allerdings zum Verkürzen der Initialisierungszeitdauer anbieten, diese Zeitspanne nach jedem Senden des Identifikationsinformationssendebefehls zu verkürzen, da erwartungsgemäß die Anzahl der antwortenden Netzwerkteilnehmer mit jedem Broadcast abnimmt. Die Änderung der Time-Out-Zeitspanne dient somit zur Optimierung des Verfahrens. Beispielsweise kann diese, wenn die Time-Out-Zeitspanne beim erstmaligen Senden des Identifikationsinformationssendebefehls zu kurz bemessen ist, da beispielsweise nur ganz wenige Antwortnachrichten erhalten werden, beim wiederholten Senden dieses Befehls auch verlängert werden.

In einer Weiterbildung dieses Verfahrens ist vorgesehen, dass die in das Netzwerk zu integrierenden Netzwerkteilnehmer, die den Identifikationsinformationssendebefehl empfangen haben, auf diesen nicht sofort antworten, sondern zunächst eine bestimmte Zeitspanne warten, bis die Identifikationsinformation als Antwortnachricht gesendet wird (Delay-Zeit). Typischerweise wird diese Delay-Zeit, mithin die Zeit, die verstreicht, bis dass die Identifikationsinformation gesendet wird, aus einer vorgegebenen Zeitspanne durch einen Zufallsgenerator bestimmt. Hierdurch wird der Kommunikationsverkehr in dem Netzwerk über die vorgegebene Delay-Zeit verteilt. Insbesondere bei Funknetzwerken oder bei Netzwerken, die zumindest in einer oder mehreren Linien eine Anbindung von Netzwerkteilnehmern über eine Funkstrecke beinhalten, können hierdurch Kollisionen der einzelnen Antwortnachrichten vermieden werden. Dabei kann vorgesehen sein, dass die Zeitspanne, aus der der Zufallsgenerator den Zeitpunkt des Sendens der Identifikationsinformation bestimmt, bei allen Netzwerkteilnehmern gleich ist. Die Time-Out-Zeitspanne, die der Inbetriebnahme-Client bis zum erneuten Absetzen eines Identifikationsinformationssendebefehl-Broadcast wartet, kann der Delay-Zeit entsprechen, innerhalb der der Zufallsgenerator eines Netzwerkteilnehmers den Zeitpunkt des Sendens der Identifikationsinformation bestimmt.

Bei größeren Netzwerken sind einzelne Netzwerklinien über Router (Koppler) miteinander verbunden. Auf diese Weise lassen sich unterschiedliche Netzwerkstrukturen ausbilden, die beispielsweise stern- oder baumförmig angelegt sind, wenn das Netzwerk in einzelne Linien unterteilt werden soll. Wenn in einem solchen Netzwerk, welches typischerweise eine große Vielzahl an Netzwerkteilnehmern in sich vereint, die Identifikationsinformation der Netzwerkteilnehmer von einem Inbetriebnahme-Client eingesammelt werden soll, werden gemäß einer Ausgestaltung dieses Verfahrens die Router in den Einsammelprozess integriert. Hierbei nutzt man die Möglichkeit, dass durch einen Befehlsteil der Durchlass bzw. die Durchlassrichtung eines solchen Routers beeinflusst werden kann. Ein solcher Befehlsteil wird auch Hopcount genannt. Ein an eine durch einen oder mehrere Router begrenzte Linie, umfassend einen oder mehrere Netzwerkteilnehmer, angeschlossenen Inbetriebnahme-Client, die einen Identifikationsinformationssendebefehl als Broadcast zusammen mit einem Befehlsteil sendet, sodass der oder die Router diese Broadcastnachricht nicht weitergeben, erhält, da dieser Broadcast den oder die an diese Linie angeschlossene Router nicht durchbricht, nur Antwortnachrichten derjenigen Netzwerkteilnehmer, die in dieser Linie angeordnet sind. Das Einsammeln der Identifikationsinformation der an dieser Linie angeschlossenen Netzwerkteilnehmer kann, wie dieses vorbeschrieben ist, durch mehrfaches Senden des Identifikationsinformationssendebefehls vorgenommen werden. In einem nachfolgenden Schritt wird der oder die diese Linie begrenzenden Router durch einen weiteren Broadcast zusammen mit einem Befehlsteil gesendet, sodass der oder die Router auf Durchlass geschaltet werden, bzw. der oder die Router den Broadcast weitergeben, sodass der gesendete Identifikationsinformationssendebefehl-Broadcast die Netzwerkteilnehmer derjenigen Linie, an die der Inbetriebnahme-Client angeschlossen ist und die Linie oder Linien derjenigen Netzwerkteilnehmer erreicht, die jenseits an dem oder den auf Durchlass geschalteten Router angeschlossen sind. Diese Linie oder Linien können wiederum durch Router begrenzt sein. Antwortnachrichten mit der Identifikationsinformation erhält der Inbetriebnahme-Client sodann von all denjenigen Netzwerkteilnehmern, von denen der Inbetriebnahme-Client bei dem ersten Durchgang vor dem Beeinflussen des oder der Router noch keine Identifikationsinformation erhalten hat und von denjenigen Netzwerkteilnehmern, die durch Beeinflussen des oder der Router an die daran angeschlossenen Linien angeschlossen sind. Genutzt wird hierfür der Routingcounter ("Hopcounter"), durch den die Reichweite eines Broadcast-Signales begrenzt werden kann. Die Reichweitenbegrenzung auf die erste Linie - diejenige Linie, an die der Inbetriebnahme-Client angeschlossen ist - wird erreicht, indem der Routingcounter auf "0" gesetzt wird. Zum Vergrößern der Reichweite in die nächste Reichweitenstufe wird der Routingcounter um einen Zähler erhöht. Dieses wird solange wiederholt, bis von dem Inbetriebnahme-Client keine Antwortnachricht mehr erhalten wird. Durch diese Maßnahme wird das Einsammeln der benötigten Identifikationsinformation, beispielsweise der Seriennummern der Netzwerkteilnehmer in geschickter Weise durch Ausnutzung der strukturellen Unterteilung des Netzwerkes in Linien genutzt, um die Anzahl der Broadcast-Empfänger und damit die Anzahl der auf einen Broadcast-Befehl antwortenden Netzwerkteilnehmer zu begrenzen. Dadurch wird der Vorgang des Einsammelns der erforderlichen Identifikationsinformation nicht nur dahingehend sicherer gemacht, dass tatsächlich alle in das Netzwerk zu integrierende Netzwerkteilnehmer in dieses integriert werden, sondern dieses wird zudem in verhältnismäßig kurzer Zeit durchgeführt.

In manchen Fällen kann der Inbetriebnahme-Client die Projektstruktur des Netzwerkes und/oder die Anzahl der darin eingebundenen Netzwerkteilnehmer insgesamt oder auch auf einzelne Linien aufgeteilt bekannt sein. Dieses erlaubt eine Überprüfung der Vollständigkeit der eingesammelten Identifikationsinformation.

In einer Weiterbildung ist vorgesehen, dass die Netzwerkteilnehmer zusammen mit ihrer Identifikationsinformation zumindest eine weitere Information bzw. Angabe nach Erhalt des Identifikationsinformationssendebefehls senden, typischerweise als Teil der Antwortnachricht. Hierbei kann es sich um eine Information zu der Art des Netzteilnehmers, den Hersteller oder dergleichen handeln. Diese Information kann durch den Inbetriebnahme-Client zum Beispiel bei einem Abgleich mit aus einer Projektstruktur des Netzwerkes bekannten Daten der Netzwerkteilnehmer verwendet werden.

Auch besteht die Möglichkeit, anstelle oder auch ergänzend zu den vorbeschriebenen Maßnahmen zum Begrenzen der Anzahl der Antwortnachrichten den Identifikationsinformationssendebefehl-Broadcast mit einer Filtereinstellung bzw. Filterabfrage - einem Filterkriterium - auszustatten, damit entweder nur diejenigen Netzwerkteilnehmer, die dem Filterkriterium genügen, oder nur diejenigen, die dem Filterkriterium nicht genügen, durch Senden ihrer Identifikationsinformation antworten. Bei einer solchen Filterung kann es sich um eine Filterung in Bezug auf einen Gerätetyp oder um die Geräte (Netzteilnehmer) eines bestimmten Herstellers, einer bestimmten Baureihe, eines bestimmten Baujahres und dergleichen handeln. Eine Vielzahl weiterer Filterkriterien ist möglich.

Bei dem Inbetriebnahme-Client kann es sich um einen Netzwerk-Server handeln. Durchaus möglich ist es auch, dass für die Initialisierung des Netzwerkes in der vorbeschriebenen Art und Weise ein Inbetriebnahme-Client verwendet wird, der die erforderlichen Bestandteile einer Einrichtungssoftware enthält und an verschiedene Schnittstellen innerhalb des Netzwerkes an dieses angeschlossen werden kann. Bei der Verwendung eines solchen Inbetriebnahme-Client kann in Abhängigkeit von der Anzahl der nach Aussenden eines Identifikationsinformationssendebefehl-Broadcasts erhaltenen Antwortnachrichten mitunter darauf geschlossen werden, ob sich der Inbetriebnahme-Client an einer für die Initialisierung des Netzwerkes günstigen Stelle befindet oder nicht. Erhält der Inbetriebnahme-Client keine oder nur eine geringe Anzahl an Rückmeldungen, könnte dieses darauf schließen lassen, dass der Inbetriebnahme-Client an einen Backbone des Netzwerkes angeschlossen ist. Dieses wird nicht als günstige Stelle angesehen, da im Zuge der vorbeschriebenen sukzessiven Reichweitenvergrößerung über die Router bereits nach einer Erweiterung um wenige Hopcounts die Anzahl der Netzwerkteilnehmer und damit die Anzahl der erhaltenen Antwortnachrichten sprunghaft ansteigt.

Zur Kontrolle, ob ein Netzwerkteilnehmer durch den vorbeschriebenen Prozess in das Netzwerk integriert ist, kann für ein optisches Feedback gesorgt werden, dass ein Netzwerkteilnehmer in das Netzwerk integriert ist. Dieses eignet sich auch für eine Fehlersuche. So kann beispielsweise vorgesehen sein, dass die Netzwerkteilnehmer über eine Lichtquelle, etwa eine LED verfügen. Diese wird vor dem Starten des Einsammelns der Identifikationsinformation der einzelnen Netzwerkteilnehmer in eine erste, beispielsweise blinkende Stellung gebracht. Mit dem Empfang des Mute-Befehls wird nicht nur dieser Netzwerkteilnehmer in den bereits beschriebenen Mute-Modus geschaltet, sondern auch die Lichtquelle in einen anderen Modus, beispielsweise in einen Aus-Modus geschaltet. Auf diese Weise erhält eine die Installation vornehmende Person eine optische Rückmeldung, welcher Netzwerkteilnehmer nach dem Initialisierungslauf noch nicht in das Netzwerk eingebunden ist. Die Nichteinbindung eines solchen Netzwerkteilnehmers in das Netzwerk kann auf einen fehlerhaften Netzwerkteilnehmer hinweisen.

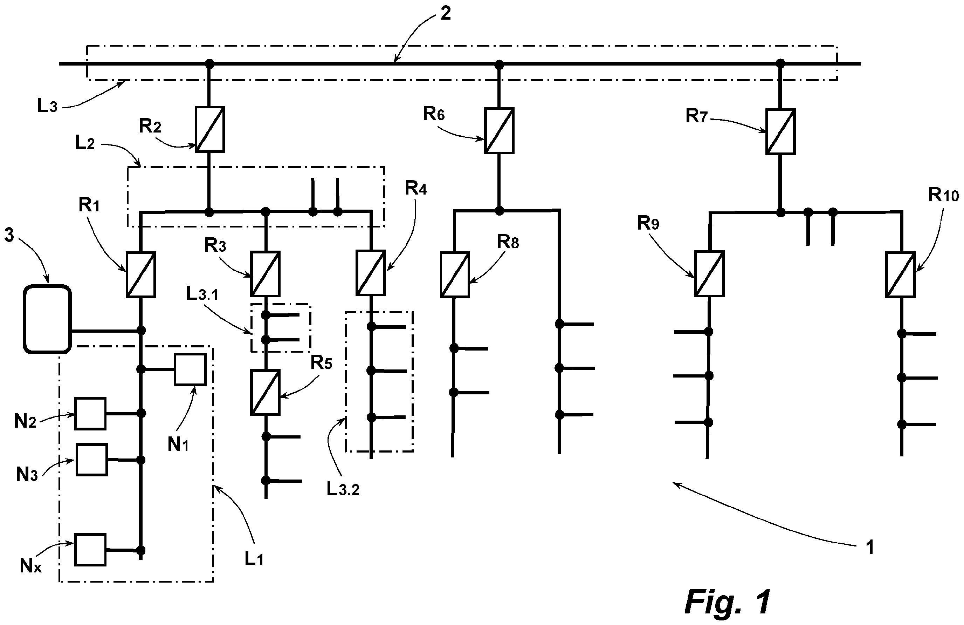

Die Erfindung ist nachfolgend anhand eines Ausführungsbeispiels unter Bezugnahme auf die beigefügte **Figur 1** beschrieben. Figur 1 zeigt schematisiert ein Netzwerk 1 in einem Ausschnitt mit daran angeschlossenen Netzwerkteilnehmern einer Gebäudeinstallation. Das Netzwerk 1 ist durch mehrere Koppler, die bei dem dargestellten Ausführungsbeispiel als Router R₁ bis R₁₀ bzw. Linienverstärker strukturiert ausgeführt sind. Unabhängig von ihrer konkreten Funktionalität sind nachfolgend diese Koppler einheitlich als Router angesprochen, auch wenn es sich bei dem Koppler R₅ um einen Linienverstärker handelt. An die an einen Router R₁ bis R₁₀ angeschlossenen Linien sind mehrere Netzwerkteilnehmer N₁ bis Nₓ angeschlossen. Beispielhalft sind an der an den Router R₁ angeschlossene Linie L₁ die Netzwerkteilnehmer mit N₁ bis Nₓ kenntlich gemacht. Bezüglich der übrigen Linien sind die Netzwerkteilnehmer nur schematisiert durch Abzweigungen von der jeweiligen Linie kenntlich gemacht.

Die die Router R₂, R₆ und R₇ verbindende Linie kann auch als Backbone 2 des Netzwerkes 1 angesprochen werden.

Teil des Netzwerkes 1 ist ein Zentral-Server. Dieser ist in der Figur nicht gezeigt.

Zum Einrichten bzw. Initialisieren des Netzwerkes 1 dient ein Inbetriebnahme-Client 3, der bei dem dargestellten Ausführungsbeispiel ein PC ist. Dieser ist über ein Interface an das Netzwerk 1 angeschlossen. Für den Prozess der Netzwerkinitialisierung verfügt der Inbetriebnahme-Client 3 über eine entsprechende Anwendungssoftware als Teil einer Einrichtungssoftware. Wird das Netzwerk gemäß dem KNX-Standard betrieben, wird man hierfür die Softwareplattform ETS (Engineering Tool Software) verwenden.

Die Kommunikation innerhalb des Netzwerkes 1 soll nach der Einrichtung mit einer symmetrischen Verschlüsselung erfolgen. Zu diesem Zweck werden in einem ersten Schritt der Netzwerkinitialisierung bzw. Netzwerkeinrichtung von dem Inbetriebnahme-Client 3 die Identifikationsinformation von jedem Netzwerkteilnehmer N₁ bis Nₓ eingesammelt. Als Identifikationsinformation dient bei dem dargestellten Ausführungsbeispiel die Seriennummer des jeweiligen Gerätes. Durch diese sind die einzelnen Netzwerkteilnehmer N₁ bis Nₓ eindeutig voneinander zu unterscheiden. Bei dem in der Figur 1 gezeigten Ausführungsbeispiel ist der Inbetriebnahme-Client 3 für die Zwecke der Netzwerkeinrichtung an die an den Router R₁ angeschlossene Linie L₁ angeschlossen. Zum Durchführen des Verfahrens werden die Router R₁ bis R₁₀ vor dem Durchführen des Initialisierungslaufes auf Durchlass eines Broadcast-Befehls parametriert, sollten die Router R₁ bis R₁₀ nicht in dieser typischerweise fabrikseitigen Parametrierung im Netzwerk 1 verbaut sein.

In einem ersten Schritt zum Einsammeln der Identifikationsinformation der Netzwerkteilnehmer N₁ bis Nₓ des Netzwerkes 1 wird nach manuellem Auslösen des Initialisierungsprozesses ein Identifikationsinformationssendebefehl als Broadcast von dem Inbetriebnahme-Client 3 gesendet. Teil dieses Broadcast-Befehls ist der Befehl, dass dieser Broadcast von einem Router, der diesen Befehl empfängt, nicht weitergegeben wird. Teil des Broadcast-Befehls ist somit der Hopcount "0". Infolge dessen erhalten den als Broadcast gesendeten Identifikationsinformationssendebefehl nur diejenigen Netzwerkteilnehmer N₁ bis Nₓ, die an die an den Router R₁ angeschlossene Linie L₁ angeschlossen sind. Haben diese diesen Broadcast-Befehl erhalten, antwortet jeder Netzwerkteilnehmer N₁ bis Nₓ innerhalb einer vorgegeben Delay-Zeit zu einem von einem Zufallsgenerator ausgewählten Zeitpunkt mit seiner Identifikationsinformation in einer Antwortnachricht. Diese Identifikationsinformation wird von dem Inbetriebnahme-Client 3 empfangen. Der Inbetriebnahme-Client 3 hält den Empfang von Antwortnachrichten mit der Identifikationsinformation für eine Time-out-Zeitspanne offen. Der Inbetriebnahme-Client 3 trägt die von den Netzwerkteilnehmern N₁ bis Nₓ erhaltene Identifikationsinformation in einem beispielsweise nicht flüchtigen Speicher ein und sendet an jeden Netzwerkteilnehmer N₁ bis Nₓ, von dem er eine Identifikationsinformation erhalten hat, einen Mute-Befehl. Dieser Mute-Befehl stellt zugleich eine Empfangsbestätigung dar. Da der Inbetriebnahme-Client 3 die Identifikationsinformation des jeweiligen Netzteilnehmers N₁ bis Nₓ erhalten hat, führt nur derjenige Netzwerkteilnehmer den Mute-Befehl aus, der durch seine in dem Mute-Befehl enthaltene Identifikationsinformation angesprochen ist. Durch diesen Mute-Befehl wird der von diesem angesprochenen Netzwerkteilnehmer N₁ bis Nₓ in einen Mute-Modus geschaltet (stumm geschaltet), in dem dieser auf den Empfang eines Identifikationsinformationssendebefehls nicht mehr antwortet. Diese Mute-Befehle können auch nach Ablauf der Time-Out-Zeitspanne gesendet werden.

Der als Broadcast gesendete Identifikationsinformationssendebefehl wird wiederholt von dem Inbetriebnahme-Client 3 gesendet. Bei der ersten Wiederholung, die bei dem dargestellten Ausführungsbeispiel nach Ablauf der Time-Out-Zeitspanne und einer weiteren Zeitspanne erfolgt, innerhalb der die Mute-Befehle an die einzelnen Netzwerkteilnehmer N₁ bis Nₓ gesendet worden sind, enthält der Broadcast-Befehl den Befehlsteil Hopcount "1". Dieses bedeutet, dass dieser Broadcast-Befehl von sämtlichen Netzwerkteilnehmern N₁ bis Nₓ der an den Router R₁ angeschlossenen Linie L₁ empfangen wird und dass der Broadcast von dem Router R₁ mit dem Hopcount-Befehl "0" weitergeleitet wird. Damit erreicht dieser Broadcast-Befehl auch die Netzwerkteilnehmer der zweiten Linienstufe, hier: der Linie L₂. Die an die Linie L₂ angeschlossenen Netzwerkteilnehmer antworten mit ihrer Identifikationsinformation. Zudem antworten diejenigen Netzwerkteilnehmer aus der Line L₁, die im ersten Durchlauf von dem Inbetriebnahme-Client 3 keinen Mute-Befehl als Empfangsbestätigungssignal erhalten haben. Mit jedem erneuten Senden des Identifikationsinformationssendebefehl-Broadcasts wird der Hopcount um einen Zähler erhöht. Beim dritten Durchgang ist die Reichweite des Broadcast-Befehls auf die dritte Linienstufe mit ihren Linien L₃, L_{3.1}, L_{3.2} ausgedehnt worden. Auf diese Weise wird die Reichweite des Identifikationsinformationssendebefehl-Broadcasts mit jedem Durchlauf erhöht.

Das Verfahren endet, wenn innerhalb der vorgegebenen Time-Out-Zeitspanne von dem Inbetriebnahme-Client 3 keine Identifikationsinformation mehr empfangen wird.

Unmittelbar über den Inbetriebnahme-Client 3 oder veranlasst durch diesen über einen in das Netzwerk stationär integrierten Netzwerk-Server wird in einem nachfolgenden Schritt eine gesicherte Verbindung zu einem Zentral-Server hergestellt, von dem anhand der an diesen übermittelten Identifikationsinformation der am Aufbau des Netzwerkes 1 beteiligten Netzwerkteilnehmer N₁ bis Nₓ ein kryptografischer Schlüssel abgerufen wird. Bei diesem kryptografischen Schlüssel handelt es sich um den Master-Key, der für die vorgesehene symmetrische Kommunikation innerhalb des Netzwerkes 1 benötigt wird. Das Verfahren zum Beziehen des kryptografischen Schlüssels von einem Zentral-Server ist in EP 3 358 802 A1 derselben Anmelderin beschrieben. Gemäß diesem Verfahren wird der kryptografische Schlüssel jedes Netzwerkteilnehmers N₁ bis Nₓ im Zusammenhang mit dem Prozess des Einprägens desselben in jeden Netzwerkteilnehmer N₁ bis Nₓ gemeinsam mit der Identifikationsinformation dieses Netzwerkteilnehmers in einem Datensatz abgelegt und dieser Datensatz an den Zentral-Server übertragen. Durch diese explizite Bezugnahme wird das diesbezüglich in diesem Dokument beschriebene Verfahren zum Gegenstand auch dieser Ausführungen gemacht.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen näher erläutert werden müsste.

### Bezugszeichenliste

- 1: Netzwerk
- 2: Backbone
- 3: Inbetriebnahme-Client
- L₁ - L_{3.2}: Linie (Netzwerklinie)
- N₁ - Nₓ: Netzwerkteilnehmer
- R₁ - R₁₀: Router

## Patentansprüche

1. Verfahren zum Bereitstellen eines kryptographischen Schlüssels für eine symmetrisch verschlüsselte Kommunikation zwischen in einem Netzwerk (1) organisierten Netzwerkteilnehmern (N₁ - Nₓ), bei welchem Verfahren in einem ersten Schritt von einem Inbetriebnahme-Client (3) durch Senden eines Identifikationsinformationssendebefehls von jedem in das Netzwerk (1) zu integrierenden Netzwerkteilnehmer (N₁ - Nₓ) eine Identifikationsinformation angefordert und nach Empfang der Identifikationsinformation von dem Inbetriebnahme-Client (3) in einem weiteren Schritt an diese Netzwerkteilnehmer (N₁ - Nₓ) ein Netzwerkschlüssel für die verschlüsselte Kommunikation übermittelt wird, **dadurch gekennzeichnet, dass** der Identifikationsinformationssendebefehl als Broadcast wiederholt gesendet wird, wobei jeder Netzwerkteilnehmer (N₁ - Nₓ), dessen Identifikationsinformation durch den Inbetriebnahme-Client (3) empfangen wurde, durch einen an diesen Netzwerkteilnehmer (N₁ - Nₓ) gerichteten Mute-Befehl stumm geschaltet wird, damit dieser Netzwerkteilnehmer (N₁ - Nₓ) bei erneutem Empfang des Identifikationsinformationssendebefehls seine Identifikationsinformation nicht nochmals sendet.

2. Verfahren nach Anspruch 1, **dadurch gekennzeichnet, dass** der Identifikationsinformationssendebefehl nach Ablauf einer vorgegebenen Time-Out-Zeitspanne wiederholt gesendet wird.

3. Verfahren nach Anspruch 2, **dadurch gekennzeichnet, dass** die Time-Out-Zeitspanne mit jedem wiederholten Senden des Identifikationsinformationssendebefehls verkürzt wird.

4. Verfahren nach einem der Ansprüche 1 bis 3, **dadurch gekennzeichnet, dass** jeder in das Netzwerk (1) zu integrierende Netzwerkteilnehmer (N₁ - Nₓ) nach Empfang des Identifikationsinformationssendebefehls eine durch einen Zufallsgenerator bestimmte Zeit wartet, bis dieser seine Identifikationsinformation sendet.

5. Verfahren nach Anspruch 4, **dadurch gekennzeichnet, dass** die Zeitspanne, aus der der Zufallsgenerator den Sendezeitpunkt zum Senden der Identifikationsinformation bestimmt, bei allen Netzwerkteilnehmern (N₁ - Nₓ) gleich ist.

6. Verfahren nach Anspruch 4, **dadurch gekennzeichnet, dass** die Time-Out-Zeitspanne derjenigen Zeitspanne entspricht, innerhalb der der Zufallsgenerator den Sendezeitpunkt zum Senden der Identifikationsinformation bestimmt, und dass die Time-Out-Zeitspanne Teil des Identifikationsinformationssendebefehls oder an diesen angehängt ist und auf diese Weise an die Netzwerkteilnehmer (N₁ - Nₓ) übermittelt wird.

7. Verfahren nach einem der Ansprüche 1 bis 6, **dadurch gekennzeichnet, dass** das Verfahren in einem durch Router (R₁ - Rio) verzweigten Netzwerk (1) durchgeführt wird und in einem ersten Schritt zum Einsammeln der Identifikationsinformation der Netzwerkteilnehmer (N₁ - Nₓ) von dem Identifikationsinformationssendebefehl nur diejenigen Netzwerkteilnehmer (N₁ - Nₓ) angesprochen werden, die sich in derselben Linie (L₁ - L_{3.2}) befinden, aus der dieser Befehl gesendet wird, und in weiteren Schritten die Reichweite des erneut gesendeten Identifikationssendebefehls sukzessive auf jeweils zumindest eine weitere Linie (L₁ - L_{3.2}) des Netzwerkes (1) ausgedehnt wird.

8. Verfahren nach Anspruch 7, **dadurch gekennzeichnet, dass** der Identifikationsinformationssendebefehl in jeder Reichweitenstufe mehrfach mit ggf. jeweils verkürzter Time-Out-Zeitspanne gesendet wird.

9. Verfahren nach Anspruch 7 oder 8, **dadurch gekennzeichnet, dass** die Reichweitenbegrenzung des Identifikationsinformationssendebefehls und die Vergrößerung der Reichweite von einer Reichweitenstufe auf die nächste durch Beeinflussung der zumindest zwei Linien (L₁ - L_{3.2}) des Netzwerkes (1) verbindenden Koppler, etwa Router oder Linienverstärker (R₁ - R₁₀) vorgenommen wird, indem diese ausgehend von einem Nichtdurchlassmodus des Identifikationsinformationssendebefehls in einen Durchlassmodus geschaltet werden.

10. Verfahren nach einem der Ansprüche 1 bis 9, **dadurch gekennzeichnet, dass** die Anzahl der eingesammelten Identifikationsinformation mit der aus einer Projektstruktur bekannten Anzahl an Netzwerkteilnehmern (N₁ - Nₓ) verglichen wird.

11. Verfahren nach Anspruch 10 in seinem Rückbezug auf einem der Ansprüche 7 bis 9, **dadurch gekennzeichnet, dass** in Abhängigkeit von der Linie (L₁ - L_{3.2}), aus der der Identifikationsinformationssendebefehl ausgesendet wird, und der aus der Projektstruktur bekannten Anzahl der in dieser Linie (L₁ - L_{3.2}) befindlichen Netzwerkteilnehmer (N₁ - Nₓ) die Time-Out-Zeitspanne vorgegeben wird, wobei die Time-Out-Zeitspanne in Abhängigkeit von der Anzahl der in der oder den weiteren Linien (L₁ - L_{3.2}) befindlichen Netzwerkteilnehmer (N₁ - Nₓ) an diese Anzahl angepasst wird.

12. Verfahren nach einem der Ansprüche 1 bis 11, **dadurch gekennzeichnet, dass** zusammen mit der Identifikationsinformation jeder Netzwerkteilnehmer (N₁ - Nₓ) zumindest eine weitere Information, etwa die Art des Netzwerkteilnehmers, den Hersteller desselben oder dergleichen gesendet wird.

13. Verfahren nach einem der Ansprüche 1 bis 12, **dadurch gekennzeichnet, dass** der Identifikationsinformationssendebefehl ein Filterkriterium enthält, dass entweder nur diejenigen Netzwerkteilnehmer (N₁ - Nₓ), die dem Filterkriterium genügen, oder nur diejenigen, die dem Filterkriterium nicht genügen, durch Senden ihrer Identifikationsinformation antworten.

## Geänderte Patentansprüche

### Geänderte Patentansprüche gemäss Regel 137(2) EPÜ.

1. Verfahren zum Bereitstellen eines kryptographischen Schlüssels für eine symmetrisch verschlüsselte Kommunikation zwischen in einem Netzwerk (1) organisierten Netzwerkteilnehmern (N₁ - Nₓ), bei welchem Verfahren in einem ersten Schritt von einem Inbetriebnahme-Client (3) durch Senden eines Identifikationsinformationssendebefehls von jedem in das Netzwerk (1) zu integrierenden Netzwerkteilnehmer (N₁ - Nₓ) eine Identifikationsinformation angefordert und nach Empfang der Identifikationsinformation von dem Inbetriebnahme-Client (3) in einem weiteren Schritt an diese Netzwerkteilnehmer (N₁ - Nₓ) ein Netzwerkschlüssel für die verschlüsselte Kommunikation übermittelt wird, **dadurch gekennzeichnet, dass** der Identifikationsinformationssendebefehl als Broadcast wiederholt gesendet wird, wobei jeder Netzwerkteilnehmer (N₁ - Nₓ), dessen Identifikationsinformation durch den Inbetriebnahme-Client (3) empfangen wurde, durch einen an diesen Netzwerkteilnehmer (N₁ - Nₓ) gerichteten Mute-Befehl stumm geschaltet wird, damit dieser Netzwerkteilnehmer (N₁ - Nₓ) bei erneutem Empfang des Identifikationsinformationssendebefehls seine Identifikationsinformation nicht nochmals sendet.

2. Verfahren nach Anspruch 1, **dadurch gekennzeichnet, dass** der Identifikationsinformationssendebefehl nach Ablauf einer vorgegebenen Time-Out-Zeitspanne wiederholt gesendet wird.

3. Verfahren nach Anspruch 2, **dadurch gekennzeichnet, dass** die Time-Out-Zeitspanne mit jedem wiederholten Senden des Identifikationsinformationssendebefehls verkürzt wird.

4. Verfahren nach einem der Ansprüche 1 bis 3, **dadurch gekennzeichnet, dass** jeder in das Netzwerk (1) zu integrierende Netzwerkteilnehmer (N₁ - Nₓ) nach Empfang des Identifikationsinformationssendebefehls eine durch einen Zufallsgenerator bestimmte Zeitspanne wartet, bis dieser seine Identifikationsinformation sendet.

5. Verfahren nach Anspruch 4, **dadurch gekennzeichnet, dass** die Zeitspanne, aus der der Zufallsgenerator den Sendezeitpunkt zum Senden der Identifikationsinformation bestimmt, bei allen Netzwerkteilnehmern (N₁ - Nₓ) gleich ist.

6. Verfahren nach Anspruch 2 und 4, **dadurch gekennzeichnet, dass** die Time-Out-Zeitspanne derjenigen Zeitspanne entspricht, innerhalb der der Zufallsgenerator den Sendezeitpunkt zum Senden der Identifikationsinformation bestimmt, und dass die Time-Out-Zeitspanne Teil des Identifikationsinformationssendebefehls oder an diesen angehängt ist und auf diese Weise an die Netzwerkteilnehmer (N₁ - Nₓ) übermittelt wird.

7. Verfahren nach einem der Ansprüche 1 bis 6, **dadurch gekennzeichnet, dass** das Verfahren in einem durch Router (R₁ - R₁₀) verzweigten Netzwerk (1) mit mehreren Linien (L₁ - L_{3.2}) durchgeführt wird und in einem ersten Schritt zum Einsammeln der Identifikationsinformation der Netzwerkteilnehmer (N₁ - Nₓ) von dem Identifikationsinformationssendebefehl nur diejenigen Netzwerkteilnehmer (N₁ - Nₓ) angesprochen werden, die sich in derselben Linie (L₁ - L_{3.2}) befinden, aus der dieser Befehl gesendet wird, und in weiteren Schritten die Reichweite des erneut gesendeten Identifikationssendebefehls sukzessive auf jeweils zumindest eine weitere Linie (L₁ - L_{3.2}) des Netzwerkes (1) ausgedehnt wird.

8. Verfahren nach Anspruch 7, **dadurch gekennzeichnet, dass** der Identifikationsinformationssendebefehl in jeder Reichweitenstufe mehrfach mit ggf. jeweils verkürzter Time-Out-Zeitspanne gesendet wird.

9. Verfahren nach Anspruch 7 oder 8, **dadurch gekennzeichnet, dass** die Reichweite des erneut gesendeten Identifikationssendebefehls in den weiteren Schritten durch Beeinflussung der zumindest zwei Linien (L₁ - L_{3.2}) des Netzwerkes (1) verbindenden Koppler, etwa Router oder Linienverstärker (R₁ - R₁₀) vorgenommen wird, indem diese ausgehend von einem Nichtdurchlassmodus des Identifikationsinformationssendebefehls in einen Durchlassmodus geschaltet werden.

10. Verfahren nach einem der Ansprüche 1 bis 9, **dadurch gekennzeichnet, dass** die Anzahl der eingesammelten Identifikationsinformation mit der aus einer Projektstruktur bekannten Anzahl an Netzwerkteilnehmern (N₁ - Nₓ) verglichen wird.

11. Verfahren nach Anspruch 10 in seinem Rückbezug auf Anspruch 2 und einen der Ansprüche 7 bis 9, **dadurch gekennzeichnet, dass** in Abhängigkeit von der Linie (L₁ - L_{3.2}), aus der der Identifikationsinformationssendebefehl ausgesendet wird, und der aus der Projektstruktur bekannten Anzahl der in dieser Linie (L₁ - L_{3.2}) befindlichen Netzwerkteilnehmer (N₁ - Nₓ) die Time-Out-Zeitspanne vorgegeben wird, wobei die Time-Out-Zeitspanne in Abhängigkeit von der Anzahl der in der oder den weiteren Linien (L₁ - L_{3.2}) befindlichen Netzwerkteilnehmer (N₁ - Nₓ) an diese Anzahl angepasst wird.

12. Verfahren nach einem der Ansprüche 1 bis 11, **dadurch gekennzeichnet, dass** zusammen mit der Identifikationsinformation jeder Netzwerkteilnehmer (N₁ - Nₓ) zumindest eine weitere Information, etwa die Art des Netzwerkteilnehmers, den Hersteller desselben oder dergleichen gesendet wird.

13. Verfahren nach einem der Ansprüche 1 bis 12, **dadurch gekennzeichnet, dass** der Identifikationsinformationssendebefehl ein Filterkriterium enthält, dass entweder nur diejenigen Netzwerkteilnehmer (N₁ - Nₓ), die dem Filterkriterium genügen, oder nur diejenigen, die dem Filterkriterium nicht genügen, durch Senden ihrer Identifikationsinformation antworten.
